(19) Europäisches Patentamt
European Patent Office
Office européen des brevets

(11) **EP 3 691 861 B1**

(12) **EUROPÄISCHE PATENTSCHRIFT**

(45) Veröffentlichungstag und Bekanntmachung des Hinweises auf die Patenterteilung:
**14.12.2022  Patentblatt 2022/50**

(21) Anmeldenummer: **18774082.4**

(22) Anmeldetag: **01.10.2018**

(51) Internationale Patentklassifikation (IPC):
**B29C 64/153** (2017.01)    **B33Y 70/00** (2020.01)
**B33Y 10/00** (2015.01)

(52) Gemeinsame Patentklassifikation (CPC):
**B33Y 10/00; B29C 64/153; B33Y 70/10;**
B29C 64/165; B33Y 80/00

(86) Internationale Anmeldenummer:
**PCT/EP2018/076685**

(87) Internationale Veröffentlichungsnummer:
**WO 2019/068659 (11.04.2019 Gazette 2019/15)**

(54) **SINTERPULVER ENTHALTEND EIN MINERALISCHES FLAMMSCHUTZMITTEL ZUR HERSTELLUNG VON FORMKÖRPERN**

SINTER POWDER COMPRISING A MINERAL FLAME RETARDANT FOR THE PRODUCTION OF MOULDED ARTICLES

POUDRE DE FRITTAGE COMPORTANT UN IGNIFUGEANT MINÉRAL DESTINÉ À LA FABRICATION DES CORPS MOULÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2017  EP 17194725**

(43) Veröffentlichungstag der Anmeldung:
**12.08.2020  Patentblatt 2020/33**

(73) Patentinhaber: **BASF SE**
**67056 Ludwigshafen (DE)**

(72) Erfinder:
• **GABRIEL, Claus**
**67056 Ludwigshafen (DE)**
• **HERLE, Natalie Beatrice Janine**
**67056 Ludwigshafen (DE)**
• **MEIER, Thomas**
**67056 Ludwigshafen (DE)**
• **ROTH, Michael**
**67056 Ludwigshafen (DE)**

(74) Vertreter: **BASF IP Association**
**BASF SE**
**GBI-C006**
**67056 Ludwigshafen (DE)**

(56) Entgegenhaltungen:
WO-A1-2017/140764    WO-A1-2017/158688
US-A1- 2007 290 410    US-A1- 2016 369 098
US-A1- 2017 190 905

# EP 3 691 861 B1

**Beschreibung**

Die vorliegende Erfindung betrifft ein Verfahren zur Herstellung eines Formkörpers, wobei in Schritt i) eine Schicht eines Sinterpulvers (SP), das unter anderem mindestens ein mineralisches Flammschutzmittel enthält, bereitgestellt wird und in Schritt ii) die in Schritt i) bereitgestellte Schicht belichtet wird. Des Weiteren betrifft die vorliegende Erfindung ein Verfahren zur Herstellung eines Sinterpulvers (SP) sowie ein Sinterpulver (SP) erhältlich nach diesem Verfahren. Außerdem betrifft die vorliegende Erfindung die Verwendung des Sinterpulvers (SP) in einem Sinterverfahren sowie Formkörper, erhältlich nach dem erfindungsgemäßen Verfahren.

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben. Die WO 2017/140764 A1 offenbart Kaolin zur mechanischen Verstärkung von polymerem Lasersinterpulver.

Das selektive Lasersintern ist für die Herstellung einer größeren Anzahl an Formkörpern häufig zu zeitintensiv, so dass zur Herstellung von größeren Mengen an Formkörpern das High-Speed Sintern (HSS) oder die sogenannte Multijet Fusion Technologie (MJF) von HP eingesetzt werden kann. Beim High-Speed Sintern wird durch Aufsprühen einer infrarotabsorbierenden Tinte auf den zu versinternden Bauteilquerschnitt und anschließendes Belichten mit einem Infrarotstrahler eine höhere Verarbeitungsgeschwindigkeit, verglichen mit dem selektiven Lasersintern, erzielt.

Nachteilig bei dem High-Speed Sintern ist allerdings, dass das Pulver außerhalb des zu versinternden Formkörperquerschnitts nicht versintern und auch nicht zusammenkleben sollte. Daher muss eine möglichst niedrige Bauraumtemperatur bei der Herstellung verwendet werden. Dies führt häufig dazu, dass der Formkörper im zu versinternden Formkörperquerschnitt nicht gut verschmilzt und/oder ein hoher Bauteilverzug resultiert.

Auch beim selektiven Lasersintern kommt es häufig zum Bauteilverzug. Wenn neben einem reinen Polyamid oder einem anderen reinen teilkristallinen Polymer, noch weitere Komponenten im Sinterpulver enthalten sind (z.B. Flammschutzmittel), ist beim selektiven Lasersintern das Sinterfenster des Sinterpulvers häufig verkleinert. Eine Verkleinerung des Sinterfensters führt häufig zum Verzug der Formkörper während der Herstellung durch selektives Lasersintern. Durch diesen Verzug ist eine Verwendung oder Weiterverarbeitung der Formkörper nahezu ausgeschlossen. Der Verzug kann bereits während der Herstellung der Formkörper so stark sein, dass ein weiterer Schichtauftrag nicht möglich ist und daher der Herstellungsprozess abgebrochen werden muss.

Problematisch sowohl beim High-Speed Sintern bzw. der Multijet Fusion Technologie als auch beim selektiven Lasersintern ist zudem, dass die erhaltenen Formkörper häufig eine geringe Wärmeformbeständigkeit aufweisen und häufig Flammschutztests nicht bestehen. Die Zugabe von Flammschutzmitteln zur Verbesserung der Feuerbeständigkeit führt häufig dazu, dass die im Sinterpulver enthaltenen Komponenten mit dem Flammschutzmittel reagieren, beispielsweise in Form von Vernetzungsreaktionen, und damit dessen Eigenschaften nachhaltig negativ beeinflussen. Weiterhin ist problematisch, dass Flammschutzmittel häufig zu ungewünschten oder sogar toxischen Emissionen im Bauraum bei Verwendung der Sinterpulver in den genannten Verfahren, führen.

Die der vorliegenden Erfindung zugrunde liegende Aufgabe bestand somit darin, ein Verfahren zur Herstellung von Formkörpern bereitzustellen, das die vorgenannten Nachteile der im Stand der Technik beschriebenen Verfahren nicht oder nur in vermindertem Maße aufweist. Das Verfahren sollte zudem einfach und kostengünstig durchführbar sein.

Gelöst wird diese Aufgabe durch ein Verfahren zur Herstellung eines Formkörpers, umfassend die Schritte:

i) Bereitstellen einer Schicht eines Sinterpulvers (SP), das die Komponenten

(A) mindestens ein teilkristallines Polyamid,
(B) mindestens ein amorphes Polyamid,
(C) mindestens ein mineralisches Flammschutzmittel

enthält,

ii) Belichten der in Schritt i) bereitgestellten Schicht des Sinterpulvers (SP),
dadurch gekennzeichnet, dass das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

Das Bereitstellen der Schicht des Sinterpulvers (SP) kann nach allen dem Fachmann bekannten Methoden erfolgen. Beispielsweise wird die Schicht des Sinterpulvers (SP) durch einen Rakel oder eine Walze in der zu erzielenden Dicke in dem Bauraum bereitgestellt.

Die Dicke der Schicht des Sinterpulvers (SP), die in Schritt i) bereitgestellt wird, kann beliebig sein. Beispielsweise liegt sie im Bereich von 50 bis 300 μm, bevorzugt im Bereich von 70 bis 200 μm und insbesondere bevorzugt im Bereich von 90 bis 150 μm.

Sinterpulver (SP)

Erfindungsgemäß enthält das Sinterpulver (SP) als Komponente (A) mindestens ein teilkristallines Polyamid, als Komponente (B) mindestens ein amorphes Polyamid und als Komponente (C) mindestens ein mineralisches Flammschutzmittel, wobei das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

Im Rahmen der vorliegenden Erfindung werden die Begriffe "Komponente (A)" und "mindestens ein teilkristallines Polyamid" synonym gebraucht und besitzen daher die gleiche Bedeutung.

Entsprechendes gilt für die Begriffe "Komponente (B)" und "mindestens ein amorphes Polyamid". Diese Begriffe werden im Rahmen der vorliegenden Erfindung ebenfalls synonym gebraucht und besitzen daher die gleiche Bedeutung.

Dementsprechend werden auch die Begriffe "Komponente (C)" und "mindestens ein mineralisches Flammschutzmittel" im Rahmen der vorliegenden Erfindung synonym gebraucht und besitzen die gleiche Bedeutung.

Das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C), jeweils bezogen auf die Summe der Gewichtsprozente der Komponenten (A), (B) und (C), bevorzugt bezogen auf das Gesamtgewicht des Sinterpulvers (SP).

Bevorzugt enthält das Sinterpulver (SP) im Bereich von 40 bis 70 Gew.-% der Komponente (A), im Bereich von 7 bis 23 Gew.-% der Komponente (B) und im Bereich von 22 bis 45 Gew.-% der Komponente (C), jeweils bezogen auf die Summe der Gewichtsprozente der Komponenten (A), (B) und (C), bevorzugt bezogen auf das Gesamtgewicht des Sinterpulvers (SP).

Am meisten bevorzugt enthält das Sinterpulver (SP) im Bereich von 50 bis 65 Gew.-% der Komponente (A), im Bereich von 10 bis 20 Gew.-% der Komponente (B) und im Bereich von 25 bis 35 Gew.-% der Komponente (C), jeweils bezogen auf die Summe der Gewichtsprozente der Komponenten (A), (B) und (C), bevorzugt bezogen auf das Gesamtgewicht des Sinterpulvers (SP).

Gegenstand der vorliegenden Erfindung ist daher auch ein Verfahren, bei dem das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

Das Sinterpulver (SP) kann darüber hinaus mindestens ein Additiv enthalten. Beispielsweise ist das mindestens eine Additiv ausgewählt aus der Gruppe bestehend aus Antinukleierungsmitteln, Stabilisatoren, Rieselhilfen, Endgruppenfunktionalisierern, Farbstoffen und Farbpigmenten.

Ein geeignetes Antinukleierungsmittel ist beispielsweise Lithiumchlorid. Geeignete Stabilisatoren sind beispielsweise Phenole, Phosphite und Kupferstabilisatoren. Geeignete Endgruppenfunktionalisierer sind beispielsweise Terephthalsäure, Adipinsäure und Propionsäure. Geeignete Farbstoffe und Farbpigmente sind beispielsweise Ruß und Eisenchromoxide.

Geeignete Rieselhilfen sind beispielsweise Kieselsäuren oder Aluminiumoxide. Als Rieselhilfe bevorzugt ist Aluminiumoxid. Ein geeignetes Aluminiumoxid ist beispielsweise Aeroxide® Alu C der Firma Evonik.

Beispielsweise enthält das Sinterpulver (SP) im Bereich von 0,1 bis 10 Gew.-% des mindestens einen Additivs, bevorzugt im Bereich von 0,2 bis 5 Gew.-% und insbesondere bevorzugt im Bereich von 0,3 bis 2,5 Gew.-%, jeweils bezogen auf das Gesamtgewicht des Sinterpulvers (SP).

Gegenstand der vorliegenden Erfindung ist daher auch ein Verfahren, bei dem das Sinterpulver (SP) zusätzlich im Bereich von 0,1 bis 10 Gew.-% mindestens eines Additivs, ausgewählt aus der Gruppe bestehend aus Antinukleierungsmitteln, Stabilisatoren, Endgruppenfunktionalisieren, Farbstoffen und Farbpigmenten enthält, bezogen auf das Gesamtgewicht des Sinterpulvers (SP).

Bevorzugt enthält das Sinterpulver (SP) außerdem zusätzlich mindestens ein Verstärkungsmittel.

Beispielsweise enthält das Sinterpulver (SP) im Bereich von 5 bis 60 Gew.-%, bevorzugt im Bereich von 10 bis 50 Gew.-% und insbesondere bevorzugt im Bereich von 15 bis 40 Gew.-% mindestens eines Verstärkungsmittels, jeweils bezogen auf das Gesamtgewicht des Sinterpulvers (SP).

Die Gewichtsprozente der Komponenten (A), (B) und (C) sowie gegebenenfalls des mindestens einen Additivs und des mindestens einen Verstärkungsmittels addieren sich üblicherweise zu 100 Gew.-%.

"Mindestens ein Verstärkungsmittel" bedeutet im Rahmen der vorliegenden Erfindung sowohl genau ein Verstärkungsmittel als auch eine Mischung aus zwei oder mehreren Verstärkungsmitteln.

Unter einem Verstärkungsmittel wird im Rahmen der vorliegenden Erfindung ein Material verstanden, das die mechanischen Eigenschaften von mit dem erfindungsgemäßen Verfahren hergestellten Formkörpern verbessert gegenüber Formkörpern, die das Verstärkungsmittel nicht enthalten.

Verstärkungsmittel als solche sind dem Fachmann bekannt. Beispielsweise kann das mindestens eine Verstärkungsmittel kugelförmig, plättchenförmig oder faserförmig sein.

Bevorzugt ist das mindestens eine Verstärkungsmittel plättchenförmig oder faserförmig.

Unter einem "faserförmigen Verstärkungsmittel" wird ein Verstärkungsmittel verstanden, bei dem das Verhältnis von Länge des faserförmigen Verstärkungsmittels zum Durchmesser des faserförmigen Verstärkungsmittels im Bereich von 2 : 1 bis 40 : 1 liegt, bevorzugt im Bereich von 3 : 1 bis 30 : 1 und insbesondere bevorzugt im Bereich von 5 : 1 bis 20 : 1, wobei die Länge des faserförmigen Verstärkungsmittels und der Durchmesser des faserförmigen Verstärkungsmittels bestimmt werden durch Mikroskopie mittels Bildauswertung an Proben nach Veraschung, wobei mindestens 70 000 Teile des faserförmigen Verstärkungsmittels nach Veraschung ausgewertet werden.

Die Länge des faserförmigen Verstärkungsmittels liegt dann üblicherweise im Bereich von 5 bis 1000 $\mu$m, bevorzugt im Bereich von 10 bis 600 $\mu$m und insbesondere bevorzugt im Bereich von 20 bis 500 $\mu$m, bestimmt mittels Mikroskopie mit Bildauswertung nach Veraschung.

Der Durchmesser liegt dann beispielsweise im Bereich von 1 bis 30 $\mu$m, bevorzugt im Bereich von 2 bis 20 $\mu$m und insbesondere bevorzugt im Bereich von 5 bis 15 $\mu$m, bestimmt mittels Mikroskopie mit Bildauswertung nach Veraschung.

Das mindestens eine Verstärkungsmittel ist in einer weiteren bevorzugten Ausführungsform plättchenförmig. Unter "plättchenförmig" wird im Rahmen der vorliegenden Erfindung verstanden, dass die Partikel des mindestens einen Verstärkungsmittels eine Verhältnis von Durchmesser zu Dicke im Bereich von 4 : 1 bis 10 : 1 aufweisen, bestimmt mittels Mikroskopie mit Bildauswertung nach Veraschung.

Geeignete Verstärkungsmittel sind dem Fachmann bekannt und beispielsweise ausgewählt aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Bevorzugte faserförmige Verstärkungsmittel sind Glasfasern und/oder Kohlenstofffasern. Diese Verstärkungsmittel können zudem aminosilanfunktionalisiert sein.

Geeignete Kieselsäurefasern sind beispielsweise Wollastonit.

Geeignete Aluminiumsilikate sind dem Fachmann als solche bekannt. Als Aluminiumsilikate werden Verbindungen bezeichnet, die $Al_2O_3$ und $SiO_2$ enthalten. Strukturell ist den Aluminiumsilikaten gemeinsam, dass die Siliziumatome tetraedrisch von Sauerstoffatomen koordiniert sind und die Aluminiumatome oktaedrisch von Sauerstoffatomen koordiniert sind. Aluminiumsilikate können darüber hinaus weitere Elemente enthalten.

Bevorzugt als Aluminiumsilikate sind Schichtsilikate. Besonders bevorzugt als Aluminiumsilikate sind kalzinierte Aluminiumsilikate, insbesondere bevorzugt sind kalzinierte Schichtsilikate. Das Aluminiumsilikat kann zudem aminosilanfunktionalisiert sein.

Ist das mindestens eine Verstärkungsmittel ein Aluminiumsilikat, kann das Aluminiumsilikat in beliebiger Form eingesetzt werden. Beispielsweise kann es als reines Aluminiumsilikat eingesetzt werden, ebenso ist es möglich, dass das Aluminiumsilikat als Mineral eingesetzt wird. Bevorzugt wird das Aluminiumsilikat als Mineral eingesetzt. Geeignete Aluminiumsilikate sind beispielsweise Feldspate, Zeolite, Sodalith, Sillimanit, Andalusit und Kaolin. Kaolin ist als Aluminiumsilikat bevorzugt.

Gegenstand der vorliegenden Erfindung ist daher auch ein Verfahren, bei dem das Sinterpulver (SP) zusätzlich als mindestens ein Verstärkungsmittel Kaolin enthält.

Kaolin gehört zu den Tongesteinen und enthält im Wesentlichen das Mineral Kaolinit. Die Summenformel von Kaolinit ist $Al_2[(OH)_4/Si_2O_5]$. Kaolinit ist ein Schichtsilikat.

Kaolin enthält neben Kaolinit üblicherweise noch weitere Verbindungen wie beispielsweise Titandioxid, Natriumoxide und Eisenoxide. Erfindungsgemäß bevorzugtes Kaolin enthält mindestens 98 Gew.-% Kaolinit, bezogen auf das Gesamtgewicht des Kaolins.

Das Sinterpulver (SP) weist Partikel auf. Diese Partikel haben beispielsweise eine Größe im Bereich von 10 bis 250 $\mu$m, bevorzugt im Bereich von 15 bis 200 $\mu$m, besonders bevorzugt im Bereich von 20 bis 120 $\mu$m und insbesondere bevorzugt im Bereich von 20 bis 110 $\mu$m.

Das erfindungsgemäße Sinterpulver (SP) weist beispielsweise

einen D10-Wert im Bereich von 10 bis 60 $\mu$m,
einen D50-Wert im Bereich von 25 bis 90 $\mu$m und
einen D90-Wert im Bereich von 50 bis 150 $\mu$m auf.

Bevorzugt weist das erfindungsgemäße Sinterpulver (SP)

einen D10-Wert im Bereich von 20 bis 50 μm,
einen D50-Wert im Bereich von 40 bis 80 μm und
einen D90-Wert im Bereich von 80 bis 125 μm auf.

Gegenstand der vorliegenden Erfindung ist daher auch ein Verfahren, bei dem das Sinterpulver (SP)

einen D10-Wert im Bereich von 10 bis 60 μm,
einen D50-Wert im Bereich von 25 bis 90 μm und
einen D90-Wert im Bereich von 50 bis 150 μm

aufweist.

Unter dem "D10-Wert" wird im Rahmen der vorliegenden Erfindung die Partikelgröße verstanden, bei der 10 Vol.-% der Partikel bezogen auf das Gesamtvolumen der Partikel kleiner oder gleich dem D10-Wert sind und 90 Vol.-% der Partikel bezogen auf das Gesamtvolumen der Partikel größer als der D10-Wert sind. In Analogie dazu wird unter dem "D50-Wert" die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind. Entsprechend wird unter dem "D90-Wert" die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Zur Ermittlung der Partikelgrößen wird das Sinterpulver (SP) trocken mittels Druckluft oder in einem Lösungsmittel, wie beispielsweise Wasser oder Ethanol, suspendiert und diese Suspension vermessen. Die Bestimmung des D10-, D50- und D90-Wertes erfolgt mittels Laserbeugung unter Verwendung eines Master Sizers 3000 der Firma Malvern. Die Auswertung erfolgt mittels Fraunhofer-Beugung.

Das Sinterpulver (SP) weist üblicherweise eine Schmelztemperatur ($T_M$) im Bereich von 160 bis 280 °C auf. Bevorzugt liegt die Schmelztemperatur ($T_M$) des Sinterpulvers (SP) im Bereich von 170 bis 265 °C und insbesondere bevorzugt im Bereich von 175 bis 245 °C.

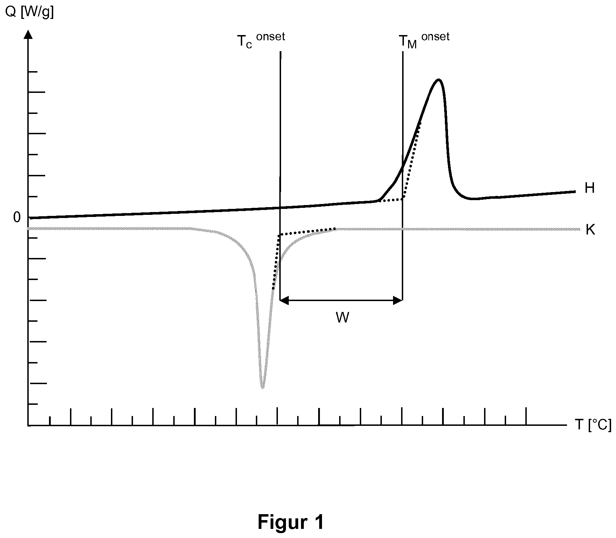

Die Schmelztemperatur ($T_M$) wird im Rahmen der vorliegenden Erfindung bestimmt mittels dynamischer Differenzkalorimetrie (DDK; Differential Scanning Calorimetry, DSC). Es werden üblicherweise ein Heizlauf (H) und ein Kühllauf (K), jeweils mit einer Heizrate bzw. Kühlrate von 20 K/min, gemessen. Dabei wird ein DSC-Diagramm, wie es in Figur 1 beispielhaft gezeigt ist, erhalten. Unter der Schmelztemperatur ($T_M$) wird dann die Temperatur verstanden, bei der der Aufschmelzpeak des Heizlaufs (H) des DSC-Diagramms ein Maximum aufweist.

Das Sinterpulver (SP) weist außerdem üblicherweise eine Kristallisationstemperatur ($T_C$) im Bereich von 120 bis 250 °C auf. Bevorzugt liegt die Kristallisationstemperatur ($T_C$) des Sinterpulvers (SP) im Bereich von 130 bis 240 °C und insbesondere bevorzugt im Bereich von 140 bis 235 °C.

Gegenstand der vorliegenden Erfindung ist daher auch ein Verfahren, bei dem das Sinterpulver (SP) eine Kristallisationstemperatur ($T_C$) im Bereich von 120 bis 250 °C aufweist.

Die Kristallisationstemperatur ($T_C$) wird im Rahmen der vorliegenden Erfindung mittels dynamischer Differenzkalorimetrie (DDK; Differential Scanning Calorimetry, DSC) bestimmt. Dabei werden üblicherweise ein Heizlauf (H) und ein Kühllauf (K), jeweils mit einer Heizrate und einer Kühlrate von 20 K/min, gemessen. Dabei wird ein DSC-Diagramm, wie es in der Figur 1 beispielhaft gezeigt ist, erhalten. Die Kristallisationstemperatur ($T_C$) ist dann die Temperatur am Minimum des Kristallisationspeaks der DSC-Kurve.

Das Sinterpulver (SP) weist außerdem üblicherweise ein Sinterfenster ($W_{SP}$) auf. Das Sinterfenster ($W_{SP}$) ist, wie nachfolgend beschrieben, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie nachfolgend beschrieben bestimmt.

Das Sinterfenster ($W_{SP}$) des Sinterpulvers (SP) liegt beispielsweise im Bereich von 10 bis 40 K (Kelvin), besonders bevorzugt im Bereich von 15 bis 35 K und insbesondere bevorzugt im Bereich von 18 bis 30 K.

Das Sinterpulver (SP) kann nach allen dem Fachmann bekannten Methoden hergestellt werden. Beispielsweise können die Komponenten (A), (B) und (C) sowie gegebenenfalls das mindestens eine Additiv und das mindestens eine Verstärkungsmittel miteinander vermahlen werden.

Das Vermahlen kann nach allen dem Fachmann bekannten Methoden durchgeführt werden, beispielsweise werden die Komponenten (A), (B) und (C) sowie gegebenenfalls das mindestens eine Additiv und das mindestens eine Verstärkungsmittel in eine Mühle gegeben und darin vermahlen.

Als Mühle eignen sich alle dem Fachmann bekannten Mühlen, beispielsweise Sichtermühlen, Gegenstrahlmühlen, Hammermühlen, Kugelmühlen, Schwingmühlen oder Rotormühlen.

Das Mahlen in der Mühle kann ebenfalls nach allen dem Fachmann bekannten Methoden erfolgen. Beispielsweise kann die Mahlung unter Inertgas stattfinden und/oder unter Kühlung mit flüssigem Stickstoff. Die Kühlung mit flüssigem Stickstoff ist bevorzugt. Die Temperatur bei der Mahlung ist beliebig, bevorzugt wird die Mahlung bei Temperaturen von flüssigem Stickstoff durchgeführt, beispielsweise bei einer Temperatur im Bereich von -210 bis -195 °C. Die Temperatur der Komponenten beim Vermahlen liegt dann beispielsweise im Bereich von -40 bis -30°C.

Bevorzugt werden zunächst die Komponenten miteinander gemischt und anschließend gemahlen. Das Verfahren zur Herstellung des Sinterpulvers (SP) umfasst dann vorzugsweise die Schritte

a) Mischen der Komponenten

    (A) mindestens ein teilkristallines Polyamid,
    (B) mindestens ein amorphes Polyamid,
    (C) mindestens ein mineralisches Flammschutzmittel,

b) Mahlen der in Schritt a) erhaltenen Mischung unter Erhalt des Sinterpulvers (SP).

Gegenstand der vorliegenden Erfindung ist daher auch ein Verfahren zur Herstellung eines Sinterpulvers (SP), umfassend die Schritte

a) Mischen der Komponenten

    (A) mindestens ein teilkristallines Polyamid,
    (B) mindestens ein amorphes Polyamid,
    (C) mindestens ein mineralisches Flammschutzmittel

b) Mahlen der in Schritt a) erhaltenen Mischung unter Erhalt des Sinterpulvers (SP) das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

In einer bevorzugten Ausführungsform umfasst das Verfahren zur Herstellung des Sinterpulvers (SP) die folgenden Schritte:

ai) Mischen der Komponenten

    (A) mindestens ein teilkristallines Polyamid,
    (B) mindestens ein amorphes Polyamid,
    (C) mindestens ein mineralisches Flammschutzmittel,

bi) Mahlen der in Schritt ai) erhaltenen Mischung unter Erhalt eines Polyamidpulvers,
bii) Mischen des in Schritt bi) erhaltenen Polyamidpulvers mit einer Rieselhilfe unter Erhalt des Sinterpulvers (SP).

Geeignete Rieselhilfen sind beispielsweise Kieselsäuren oder Aluminiumoxide. Als Rieselhilfe bevorzugt ist Aluminiumoxid. Ein geeignetes Aluminiumoxid ist beispielsweise Aeroxide® Alu C der Firma Evonik.

Für den Fall, dass das Sinterpulver (SP) eine Rieselhilfe enthält, wird diese bevorzugt in Verfahrensschritt bii) zugegeben. Das Sinterpulver (SP) enthält in einer Ausführungsform 0,1 bis 1 Gew.-%, bevorzugt 0,2 bis 0,8 Gew.-% und besonders bevorzugt 0,3 bis 0,6 Gew.-% Rieselhilfe, jeweils bezogen auf das Gesamtgewicht des Sinterpulvers (SP) und der Rieselhilfe.

Ein weiterer Gegenstand der vorliegenden Erfindung ist daher auch ein Verfahren, bei dem Schritt b) die folgenden Schritte umfasst:

bi) Mahlen der in Schritt a) erhaltenen Mischung unter Erhalt eines Polyamidpulvers,
bii) Mischen des in Schritt bi) erhaltenen Polyamidpulvers mit einer Rieselhilfe unter Erhalt des Sinterpulvers (SP).

Verfahren zur Compoundierung (zum Mischen) in Schritt a) sind dem Fachmann als solche bekannt. Beispielsweise kann das Mischen in einem Extruder erfolgen, insbesondere bevorzugt in einem Doppelschneckenextruder.

Gegenstand der vorliegenden Erfindung ist daher auch ein Verfahren zur Herstellung eines Sinterpulvers (SP), bei dem das Mischen der Komponenten in Schritt a) in einem Doppelschneckenextruder erfolgt.

Für das Mahlen in Schritt b) gelten die zuvor beschriebenen Ausführungen und Bevorzugungen im Hinblick auf das Mahlen entsprechend.

Ein weiterer Gegenstand der vorliegenden Erfindung ist daher auch das Sinterpulver (SP), erhältlich nach dem erfindungsgemäßen Verfahren.

In einer Ausführungsform der vorliegenden Erfindung ist in dem Sinterpulver (SP) die Komponente (C) mit der Komponente (A) und/oder der Komponente (B) beschichtet.

Die Komponente (C) ist insbesondere dann mit der Komponente (A) und/oder der Komponente (B) beschichtet, wenn zur Herstellung des Sinterpulvers (SP) die Komponenten (A), (B) und (C) zunächst miteinander vermischt (compoundiert) werden, bevorzugt wenn das Sinterpulver (SP) hergestellt wird durch das vorstehend beschriebene Verfahren, umfassend die Schritte a) und b).

Gegenstand der vorliegenden Erfindung ist daher auch ein Verfahren, bei dem in dem Sinterpulver (SP) die Komponente (C) mit der Komponente (A) und/oder mit der Komponente (B) beschichtet ist.

In einer weiteren Ausführungsform der vorliegenden Erfindung liegt das Sinterpulver (SP) als Gemisch vor. Anders ausgedrückt, liegen in dieser Ausführungsform die Komponenten (A), (B) und (C) nebeneinander vor und die Komponente (C) ist nicht mit der Komponente (A) und/oder der Komponente (B) beschichtet.

Selbstverständlich ist es auch möglich, dass ein Teil der Komponente (C) mit der Komponente (A) und/oder der Komponente (B) beschichtet ist und dass ein anderer Teil der Komponente (C) nicht mit der Komponente (A) und/oder der Komponente (B) beschichtet ist.

Komponente (A)

Erfindungsgemäß ist die Komponente (A) mindestens ein teilkristallines Polyamid.

"Mindestens ein teilkristallines Polyamid" bedeutet im Rahmen der vorliegenden Erfindung sowohl genau ein teilkristallines Polyamid als auch eine Mischung aus zwei oder mehreren teilkristallinen Polyamiden.

"Teilkristallin" bedeutet im Rahmen der vorliegenden Erfindung, dass das Polyamid eine Schmelzenthalpie $\Delta H2_{(A)}$ von größer als 45 J/g, bevorzugt von größer als 50 J/g und insbesondere bevorzugt von größer als 55 J/g aufweist, jeweils gemessen mittels dynamischer Differenzkalorimetrie (differential scanning calorimetry; DSC) gemäß ISO 11357-4:2014.

Das erfindungsgemäße mindestens eine teilkristalline Polyamid (A) weist also üblicherweise eine Schmelzenthalpie $\Delta H2_{(A)}$ von größer als 45 J/g, bevorzugt von größer als 50 J/g und insbesondere bevorzugt von größer als 55 J/g auf, jeweils gemessen mittels dynamischer Differenzkalorimetrie (differential scanning calorimetry; DSC) gemäß ISO 11357-4:2014.

Das erfindungsgemäße mindestens eine teilkristalline Polyamid (A) weist üblicherweise eine Schmelzenthalpie $\Delta H2_{(A)}$ von weniger als 200 J/g, bevorzugt von weniger als 150 J/g und insbesondere bevorzugt von weniger als 100 J/g auf, jeweils gemessen mittels dynamischer Differenzkalorimetrie (differential scanning calorimetry; DSC) gemäß ISO 11357-4:2014.

Geeignete teilkristalline Polyamide (A) weisen im Allgemeinen eine Viskositätzahl ($VZ_{(A)}$) im Bereich von 90 bis 350 ml/g, vorzugsweise im Bereich von 100 bis 275 ml/g und insbesondere bevorzugt im Bereich von 110 bis 250 ml/g auf, bestimmt in einer 0,5 Gew.-%igen Lösung von 96 Gew.-%iger Schwefelsäure bei 25 °C, gemessen gemäß ISO 307:2013-8.

Gegenstand der vorliegenden Erfindung ist somit auch ein Verfahren, bei dem die Komponente (A) eine Viskositätzahl ($VZ_{(A)}$) im Bereich von 90 bis 350 ml/g aufweist, bestimmt in einer 0,5 Gew.-%igen Lösung der Komponente (A) in 96 Gew.-%iger Schwefelsäure bei 25 °C.

Die erfindungsgemäße Komponente (A) weist üblicherweise eine Schmelztemperatur ($T_{M(A)}$) auf. Bevorzugt liegt die Schmelztemperatur ($T_{M(A)}$) der Komponente (A) im Bereich von 170 bis 280 °C, besonders bevorzugt im Bereich von 180 bis 265 °C und insbesondere bevorzugt im Bereich von 185 bis 245 °C, bestimmt nach ISO 11357-3:2014.

Gegenstand der vorliegenden Erfindung ist somit auch ein Verfahren, bei dem die Komponente (A) eine Schmelztemperatur ($T_{M(A)}$) aufweist, wobei die Schmelztemperatur ($T_{M(A)}$) im Bereich von 170 bis 230 °C liegt.

Geeignete Komponenten (A) weisen ein gewichtsmittleres Molekulargewicht ($M_{W(A)}$) im Bereich von 500 bis 2 000 000 g/mol auf, bevorzugt im Bereich von 10 000 bis 90 000 g/mol und insbesondere bevorzugt im Bereich von 20 000 bis 70 000 g/mol. Das gewichtsmittlere Molekulargewicht ($M_{W(A)}$) wird bestimmt mittels SEC-MALLS *(Size Exclusion Chromatography-Multi-Angle Laser Light Scattering)* nach Chi-san Wu "Handbook of size exclusion chromatography and related techniques", Seite 19.

Als das mindestens eine teilkristalline Polyamid (A) sind beispielsweise teilkristalline Polyamide (A) geeignet, die sich von Lactamen mit 4 bis 12 Ringgliedern ableiten. Weiterhin sind teilkristalline Polyamide (A) geeignet, die durch Umsetzung von Dicarbonsäuren mit Diaminen erhalten werden. Als mindestens ein teilkristallines Polyamid (A), das sich von Lactam ableitet, sind beispielhaft Polyamide erwähnt, die sich von Polycaprolactam, Polycapryllactam und/oder Polylaurinlactam ableiten.

Für den Fall, dass mindestens ein teilkristallines Polyamid (A) eingesetzt wird, das aus Dicarbonsäuren und Diaminen erhältlich ist, können als Dicarbonsäuren Alkandicarbonsäuren mit 6 bis 12 Kohlenstoffatomen eingesetzt werden. Darüber hinaus sind aromatische Dicarbonsäuren geeignet.

Beispielhaft seien hier Adipinsäure, Azelainsäure, Sebacinsäure und Dodecandicarbonsäure als Dicarbonsäuren genannt.

Als Diamine eignen sich beispielsweise Alkandiamine mit 4 bis 12 Kohlenstoffatomen sowie aromatische oder zyklische Diamine, wie beispielsweise m-Xylylendiamin, Di-(4-Aminophenyl)Methan, Di-(4-Aminocyclohexyl)-Methan, 2,2-Di-(4-aminophenyl)-Propan oder 2,2-Di-(4-Aminocyclohexyl)-Propan.

Bevorzugt als Komponente (A) sind Polycaprolactam (Polyamid 6) sowie Copolyamid 6/66 (Polyamid 6/6.6). Copolyamid 6/66 weist vorzugsweise einen Anteil von 5 bis 95 Gew.-% an Caprolactameinheiten auf, bezogen auf das Gesamtgewicht des Copolyamids 6/66.

Weiterhin als mindestens ein teilkristallines Polyamid (P) geeignet sind Polyamide, die durch Copolymerisation zweier oder mehrerer der vorstehend und nachstehend genannten Monomere erhältlich sind oder Mischungen mehrerer Polyamide, wobei das Mischungsverhältnis beliebig ist. Besonders bevorzugt sind Mischungen von Polyamid 6 mit anderen Polyamiden, insbesondere Copolyamid 6/66.

Die nachfolgende, nicht abschließende Aufstellung enthält die vorstehend genannten sowie weitere geeignete teilkristalline Polyamide (A) sowie die enthaltenen Monomere.

AB-Polymere:

| | |
|---|---|
| PA 4 | Pyrrolidon |
| PA 6 | $\varepsilon$-Caprolactam |
| PA 7 | Enantholactam |
| PA 8 | Capryllactam |
| PA 9 | 9-Aminopelargonsäure |
| P 11 | 11-Aminoundecansäure |
| P 12 | Laurinlactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylendiamin, Adipinsäure |
| PA 6/66 | (siehe PA 6 und PA 66) |
| PA 6/12 | (siehe PA 6 und PA 12) |
| PA 6/6.36 | $\varepsilon$-Caprolactam, Hexamethylendiamin, $C_{36}$-Dimersäure |
| PA 6T/6 | (siehe PA 6T und PA 6) |

Bevorzugt ist die Komponente (A) ausgewählt aus der Gruppe bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

Gegenstand der vorliegenden Erfindung ist daher auch ein Verfahren bei dem die Komponente (A) ausgewählt ist aus der Gruppe, bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

Am meisten bevorzugt ist die Komponente (A) ausgewählt aus der Gruppe bestehend aus Polyamid 6 und Polyamid 6/66.

Komponente (B)

Die Komponente (B) ist mindestens ein amorphes Polyamid.

"Mindestens ein amorphes Polyamid" bedeutet im Rahmen der vorliegenden Erfindung sowohl genau ein amorphes Polyamid als auch eine Mischung aus zwei oder mehreren amorphen Polyamiden.

"Amorph" bedeutet im Rahmen der vorliegenden Erfindung, dass das Polyamid bei der dynamischen Differenzkalorimetrie (Differential Scanning Calorimetry; DSC), gemessen gemäß ISO 11357, keinen Schmelzpunkt aufweist.

"Kein Schmelzpunkt" bedeutet, dass die Schmelzenthalpie des amorphen Polyamids $\Delta H2_{(B)}$ kleiner als 10 J/g, bevorzugt kleiner als 8 J/g und insbesondere bevorzugt kleiner als 5 J/g ist, jeweils gemessen mittels dynamischer Differenzkalorimetrie (DDK; Differential Scanning Calorimetry, DSC) gemäß ISO 11357-4: 2014.

Das erfindungsgemäße mindestens eine amorphe Polyamid (B) weist also üblicherweise eine Schmelzenthalpie $\Delta H2_{(B)}$ von kleiner als 10 J/g, bevorzugt von kleiner als 8 J/g und insbesondere bevorzugt von kleiner als 5 J/g auf, jeweils gemessen mittels dynamischer Differenzkalorimetrie (DDK; Differential Scanning Calorimetry, DSC) gemäß ISO 11357-4: 2014.

Geeignete amorphe Polyamide weisen im Allgemeinen eine Viskositätszahl ($VZ_{(B)}$) im Bereich von 60 bis 200 ml/g, bevorzugt im Bereich von 70 bis 150 ml/g und insbesondere bevorzugt im Bereich von 75 bis 125 ml/g auf, bestimmt in einer 0,5 Gew.-%igen Lösung der Komponente (B) in 96 Gew.-%iger Schwefelsäure bei 25 °C gemäß ISO 307: 2013-08.

Die erfindungsgemäße Komponente (B) weist üblicherweise eine Glasübergangstemperatur ($T_{G(B)}$) auf, wobei die Glasübergangstemperatur ($T_{G(B)}$) üblicherweise im Bereich von 100 bis 180 °C, bevorzugt im Bereich von 110 bis 160 °C und insbesondere bevorzugt im Bereich von 120 bis 155 °C liegt, bestimmt mittels ISO 11357-2: 2014.

Geeignete Komponenten (B) weisen ein gewichtsmittleres Molekulargewicht ($M_{W(B)}$) im Bereich von 5000 bis 35000 g/mol auf, bevorzugt im Bereich von 10000 bis 30000 g/mol und insbesondere bevorzugt im Bereich von 15000 bis 25000 g/mol. Das gewichtsmittlere Molekulargewicht wird bestimmt mittels SEC-MALLS (Size Exclusion Chromatography Multi-Angle Laser Light Scattering) nach Chi-San Wu, "Handbook of Size Exclusion Chromatography and the Related Techniques", Seite 19.

Bevorzugt ist die Komponente (B) ein amorphes teilaromatisches Polyamid. Derartige amorphe teilaromatische Polyamide sind dem Fachmann bekannt und beispielsweise ausgewählt aus der Gruppe bestehend aus PA6I/6T, PA 6I und PA 6/3T.

Die Komponente (B) ist daher bevorzugt ausgewählt aus der Gruppe bestehend aus PA6I/6T, PA 6I, PA 6/3T.

Gegenstand der vorliegenden Erfindung ist daher auch ein Verfahren, bei dem die Komponente (B) ausgewählt ist aus der Gruppe bestehend aus PA 6I/6T, PA 6I und PA 6/3T.

Wenn als Komponente (B) Polyamid 6I/6T eingesetzt wird, kann dieses beliebige Anteile an 6I- und an 6T-Baueinheiten enthalten. Bevorzugt liegt das molare Verhältnis von 6I-Baueinheiten zu 6T-Baueinheiten im Bereich von 1 zu 1 bis 3 zu 1, besonders bevorzugt im Bereich von 1,5 zu 1 bis 2,5 zu 1 und insbesondere bevorzugt im Bereich von 1,8 zu 1 bis 2,3 zu 1.

Die MVR (275 °C / 5 kg) (Schmelze-Volumenfließrate; Melt Volume-flow Rate, MVR) der Komponente (B) liegt bevorzugt im Bereich von 50 ml/10 min bis 150 ml/10 min, besonders bevorzugt im Bereich von 95 ml/10 min bis 105 ml/10 min.

Die Nullviskosität $\eta_0$ (Zero shear rate viscosity) der Komponente (B) liegt beispielsweise im Bereich von 770 bis 3250 Pas. Die Nullviskosität $\eta_0$ (Zero shear rate viscosity) wird bestimmt mit einem Rotationsviskosimeter "DHR-1" der Firma TA Instruments und einer Platte-Platte-Geometrie mit einem Durchmesser von 25 mm und einem Spaltabstand von 1 mm. Es werden ungetemperte Proben der Komponente (B) für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messtemperatur: 240 °C, Messzeit: 20 min, Vorheizzeit nach Probenpräparation: 1,5 min.

Die Komponente (B) weist eine Aminoendgruppenkonzentration (AEG) auf, die bevorzugt im Bereich von 30 bis 45 mmol/kg und insbesondere bevorzugt im Bereich von 35 bis 42 mmol/kg liegt.

Zur Bestimmung der Aminoendgruppenkonzentration (AEG) wird 1 g der Komponente (B) in 30 ml eines Phenol/Methanol-Gemischs (Volumenverhältnis Phenol : Methanol 75:25) gelöst und anschließend mit 0,2 N Salzsäure in Wasser potentiometrisch titriert.

Die Komponente (B) weist eine Carboxylendgruppenkonzentration (CEG) auf, die bevorzugt im Bereich von 60 bis 155 mmol/kg und insbesondere bevorzugt im Bereich von 80 bis 135 mmol/kg liegt.

Zur Bestimmung der Carboxylendgruppenkonzentration (CEG) wird 1 g der Komponente (B) in 30 ml Benzylalkohol aufgelöst. Anschließend wird bei 120 °C mit 0,05 N Kalilauge in Wasser visuell titriert.

Komponente (C)

Erfindungsgemäß ist die Komponente (C) mindestens ein mineralisches Flammschutzmittel.

"Mindestens ein mineralisches Flammschutzmittel" bedeutet im Rahmen der vorliegenden Erfindung sowohl genau ein mineralisches Flammschutzmittel als auch eine Mischung aus zwei oder mehreren mineralischen Flammschutzmitteln.

Unter einem mineralischen Flammschutzmittel wird im Rahmen der vorliegenden Erfindung eine Verbindung verstanden, die die Ausbreitung von Bränden einschränkt, verlangsamt oder verhindert und welche zudem auf Basis von Mineralen ist.

Es versteht sich von selbst, dass die Komponente (C) von dem gegebenenfalls in dem Sinterpulver (SP) enthaltenen mindestens einen Verstärkungsmittel verschieden ist. Ebenso ist die Komponente (C) vom dem gegebenenfalls in dem Sinterpulver (SP) enthaltenen mindestens einen Additiv verschieden.

Es ist darüber hinaus bevorzugt, dass das Sinterpulver (SP) kein mineralisches Flammschutzmittel, außer der Komponente (C), enthält. Insbesondere bevorzugt enthält das Sinterpulver (SP) kein Flammschutzmittel außer der Komponente (C).

Bevorzugt ist das mindestens eine mineralische Flammschutzmittel auf Basis von Aluminium und/oder Magnesium.

Gegenstand der vorliegenden Erfindung ist daher auch ein Verfahren, bei dem die Komponente (C) auf Basis von Magnesium und/oder Aluminium ist.

Bevorzugt sind Flammschutzmittel, die bei erhöhten Temperaturen Wasser abspalten. Daher sind als mineralische Flammschutzmittel bevorzugt Aluminiumhydroxid und/oder Magnesiumhydroxid und/oder Aluminiumoxidhydroxid. Magnesiumhydroxid ist besonders bevorzugt als das mindestens eine mineralische Flammschutzmittel.

Das mindestens eine mineralische Flammschutzmittel kann beispielsweise auch als Mineral eingesetzt werden. Ein geeignetes Mineral ist beispielsweise Böhmit. Böhmit hat die chemische Zusammensetzung AIO(OH) bzw. $\gamma$-ALOOH (Aluminiumoxidhydroxid).

Aluminiumhydroxid wird auch als ATH oder Aluminiumtrihydroxid bezeichnet. Magnesiumhydroxid wird auch als MDH oder Magnesiumdihydroxid bezeichnet.

Gegenstand der vorliegenden Erfindung ist daher auch ein Verfahren, bei dem die Komponente (C) ausgewählt ist aus der Gruppe bestehend aus Magnesiumhydroxid, Aluminiumoxidhydroxid und Aluminiumhydroxid.

Die Komponente (C) weist beispielsweise einen D10-Wert im Bereich von 0,3 bis 1,2 $\mu$m, einen D50-Wert im Bereich von 1,2 bis 2 $\mu$m und einen D90-Wert im Bereich von 2 bis 5 $\mu$m auf.

Bevorzugt weist die Komponente (C) einen D10-Wert im Bereich von 0,5 bis 1 $\mu$m, einen D50-Wert im Bereich von 1,3 bis 1,8 $\mu$m und einen D90-Wert im Bereich von 2 bis 4 $\mu$m auf.

Die Bestimmung des D10-, D50- und D90-Wertes erfolgt wie vorstehend für den D10-, D50- und D90-Wert des Sinterpulvers (SP) beschrieben.

Gegenstand der vorliegenden Erfindung ist daher auch ein Verfahren zur Herstellung eines Sinterpulvers (SP), bei dem die Komponente (C) einen D10-Wert im Bereich von 0,3 bis 1,2 $\mu$m, einen D50-Wert im Bereich von 1,2 bis 2 $\mu$m und einen D90-Wert im Bereich von 2 bis 5 $\mu$m aufweist.

Die Komponente (C) kann zudem oberflächenmodifiziert sein. Beispielsweise ist die Komponente (C) aminosilanmodifiziert.

Schritt ii)

In Schritt ii) wird die in Schritt i) bereitgestellte Schicht des Sinterpulvers (SP) belichtet.

Beim Belichten schmilzt zumindest ein Teil der Schicht des Sinterpulvers (SP) auf. Das aufgeschmolzene Sinterpulver (SP) fließt ineinander und bildet eine homogene Schmelze. Nach dem Belichten kühlt der aufgeschmolzene Teil der Schicht des Sinterpulvers (SP) wieder ab und die homogene Schmelze erstarrt wieder.

Zur Belichtung eignen sich alle dem Fachmann bekannten Methoden. Bevorzugt erfolgt das Belichten in Schritt ii) mit einer Strahlungsquelle. Die Strahlungsquelle ist bevorzugt ausgewählt aus der Gruppe bestehend aus Infrarotstrahlern und Lasern. Als Infrarotstrahler sind Nahinfrarot-Strahler insbesondere bevorzugt.

Gegenstand der vorliegenden Erfindung ist daher auch ein Verfahren, bei dem das Belichten in Schritt ii) mit einer Strahlungsquelle erfolgt, die ausgewählt ist aus der Gruppe bestehend aus Lasern und Infrarotstrahlern.

Geeignete Laser sind dem Fachmann bekannt und beispielsweise Faserlaser, Nd:YAG-Laser (Neodym-dotierter Yttrium-Aluminium-Granat-Laser) oder Kohlendioxidlaser.

Wird als Strahlungsquelle beim Belichten in Schritt ii) ein Laser eingesetzt, so wird üblicherweise die in Schritt i) bereitgestellte Schicht des Sinterpulvers (SP) mit dem Laserstrahl lokal und kurzzeitig belichtet. Dabei werden nur die Teile des Sinterpulvers (SP), die vom Laserstrahl belichtet worden sind, selektiv aufgeschmolzen. Wird in Schritt ii) ein Laser eingesetzt, wird das erfindungsgemäße Verfahren auch als selektives Lasersintern bezeichnet. Das selektive Lasersintern ist dem Fachmann als solches bekannt.

Wird als Strahlungsquelle beim Belichten in Schritt ii) ein Infrarot-Strahler, insbesondere ein Nahinfrarot-Strahler eingesetzt, so liegt die Wellenlänge, mit der die Strahlungsquelle strahlt, üblicherweise im Bereich von 780 nm bis 1000 $\mu$m, bevorzugt im Bereich von 780 nm bis 50 $\mu$m und insbesondere im Bereich von 780 nm bis 2,5 $\mu$m.

Beim Belichten in Schritt ii) wird dann üblicherweise die gesamte Schicht des Sinterpulvers (SP) belichtet. Damit beim Belichten nur die gewünschten Bereiche des Sinterpulvers (SP) aufschmelzen, wird üblicherweise eine Infrarot-absorbierende Tinte (IR-absorbierende Tinte) auf die Bereiche aufgebracht, die aufschmelzen sollen.

Das Verfahren zur Herstellung des Formkörpers umfasst dann bevorzugt zwischen Schritt i) und Schritt ii) einen Schritt i-1), Aufbringen mindestens einer IR-absorbierenden Tinte, auf zumindest einen Teil der in Schritt i) bereitgestellten Schicht des Sinterpulvers (SP).

Ein weiterer Gegenstand der vorliegenden Erfindung ist daher auch ein Verfahren zur Herstellung eines Formkörpers, umfassend die Schritte

i) Bereitstellen einer Schicht eines Sinterpulvers (SP), das die Komponenten

(A) mindestens ein teilkristallines Polyamid,
(B) mindestens ein amorphes Polyamid,
(C) mindestens ein mineralisches Flammschutzmittel

enthält,

i-1) Aufbringen mindestens einer IR-absorbierenden Tinte auf zumindest einen Teil der in Schritt i) bereitgestellten Schicht des Sinterpulvers (SP)

ii) Belichten der in Schritt i) bereitgestellten Schicht des Sinterpulvers (SP). (SP),wobei das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

Als IR-absorbierende Tinten eignen sich alle dem Fachmann bekannten IR-absorbierenden Tinten, insbesondere dem Fachmann bekannte IR-absorbierende Tinte für das High Speed Sintern.

IR-absorbierende Tinten enthalten üblicherweise zumindest einen Absorber, der IR-Strahlung, bevorzugt NIR-Strahlung (Nahinfrarot-Strahlung) absorbiert. Beim Belichten der Schicht des Sinterpulvers (SP) in Schritt ii) wird durch die Absorption der IR-Strahlung, bevorzugt der NIR-Strahlung, durch den in der IR-absorbierenden Tinten enthaltenen IR-Absorber der Teil der Schicht des Sinterpulvers (SP), auf den die IR-absorbierende Tinte aufgebracht worden ist, selektiv erwärmt.

Die IR-absorbierende Tinte kann neben dem zumindest einen Absorber eine Trägerflüssigkeit enthalten. Geeignete Trägerflüssigkeiten sind dem Fachmann bekannt und beispielsweise Öle oder Lösungsmittel.

Der zumindest eine Absorber eine Absorber kann in der Trägerflüssigkeit gelöst oder dispergiert vorliegen.

Erfolgt die Belichtung in Schritt ii) mit einer Strahlungsquelle, die ausgewählt ist aus Infrarot-Strahlern und wird Schritt i-1) durchgeführt, dann wird das erfindungsgemäße Verfahren auch als *High-Speed Sintering (HSS)* oder *Multijet-Fusion-Verfahren (MJF)* bezeichnet. Diese Verfahren sind dem Fachmann als solche bekannt.

Im Anschluss an den Schritt ii) wird die Schicht des Sinterpulvers (SP) üblicherweise um die Schichtdicke der in Schritt i) bereitgestellten Schicht des Sinterpulvers (SP) abgesenkt und eine weitere Schicht des Sinterpulvers (SP) aufgebracht. Diese wird anschließend gemäß Schritt ii) erneut belichtet.

Dadurch verbindet sich zum Einen die obere Schicht des Sinterpulvers (SP) mit der unteren Schicht des Sinterpulvers (SP), außerdem verbinden sich die Partikel des Sinterpulvers (SP) innerhalb der oberen Schicht durch Aufschmelzen miteinander.

Im erfindungsgemäßen Verfahren können die Schritte i) und ii) sowie gegebenenfalls i-1) also wiederholt werden.

Indem das Absenken des Pulverbetts, das Aufbringen des Sinterpulvers (SP) und das Belichten und damit das Aufschmelzen des Sinterpulvers (SP) wiederholt werden, werden dreidimensionale Formkörper hergestellt. Es ist möglich, Formkörper herzustellen, die beispielsweise auch Hohlräume aufweisen. Ein zusätzliches Stützmaterial ist nicht notwendig, da das nicht aufgeschmolzene Sinterpulver (SP) selbst als Stützmaterial fungiert.

Ein weiterer Gegenstand der vorliegenden Erfindung ist daher auch ein Formkörper erhältlich nach dem erfindungsgemäßen Verfahren.

Bei dem erfindungsgemäßen Verfahren von besonderer Bedeutung ist der Schmelzbereich des Sinterpulvers (SP), das sogenannte Sinterfenster ($W_{SP}$) des Sinterpulvers (SP).

Das Sinterfenster ($W_{SP}$) des Sinterpulvers (SP) kann beispielsweise durch dynamische Differenzkalorimetrie (DDK; Differential Scanning Calorimetry, DSC) bestimmt werden.

Bei der dynamischen Differenzkalorimetrie werden die Temperatur einer Probe, im vorliegenden Fall also einer Probe des Sinterpulvers (SP), und die Temperatur einer Referenz linear mit der Zeit geändert. Dazu wird der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge $Q_R$.

Geht die Probe eine endotherme Phasenumwandlung ein, so muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC-Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs üblicherweise mit einer Heizrate von 20 K/min. Das Abkühlen während des Kühllaufs erfolgt im Rahmen der vorliegenden Erfindung üblicherweise mit einer Kühlrate von 20 K/min.

Ein DSC-Diagramm mit einem Heizlauf (H) und einem Kühllauf (K) ist exemplarisch in Figur 1 dargestellt. Anhand des DSC-Diagramms können die Onset-Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset} \ .$$

Im Rahmen der vorliegenden Erfindung haben die Begriffe "Sinterfenster ($W_{SP}$)", "Größe des Sinterfensters ($W_{SP}$)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Das erfindungsgemäße Sinterpulver (SP) eignet sich besonders gut zur Verwendung in einem Sinterverfahren.

Gegenstand der vorliegenden Erfindung ist daher auch die Verwendung eines Sinterpulvers (SP), das die Komponenten

    (A) mindestens ein teilkristallines Polyamid,
    (B) mindestens ein amorphes Polyamid,
    (C) mindestens ein mineralisches Flammschutzmittel

enthält, in einem Sinterverfahren.

Formkörper

Durch das erfindungsgemäße Verfahren wird ein Formkörper erhalten. Der Formkörper kann direkt nach dem Erstarren des beim Belichten in Schritt ii) aufgeschmolzenen Sinterpulvers (SP) aus dem Pulverbett entnommen werden. Ebenso ist es möglich, den Formkörper erst abzukühlen und dann erst aus dem Pulverbett zu entnehmen. Gegebenenfalls anhaftende Partikel des Sinterpulvers, die nicht aufgeschmolzen worden sind, können mechanisch nach bekannten Verfahren von der Oberfläche entfernt werden. Verfahren zur Oberflächenbehandlung des Formkörpers umfassen beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberfläche zu behandeln.

Ein weiterer Gegenstand der vorliegenden Erfindung ist daher ein Formkörper, erhältlich nach dem erfindungsgemäßen Verfahren.

Die erhaltenen Formkörper enthalten üblicherweise im Bereich von 30 bis 70 Gew.-% der Komponente (A), im Bereich von 5 bis 25 Gew.-% der Komponente (B) und im Bereich von 20 bis 60 Gew.-% der Komponente (C), jeweils bezogen auf das Gesamtgewicht des Formkörpers.

Bevorzugt enthält der Formkörper im Bereich von 40 bis 70 Gew.-% der Komponente (A), im Bereich von 7 bis 23 der Komponente (B) und im Bereich von 22 bis 45 Gew.-% der Komponente (C), jeweils bezogen auf das Gesamtgewicht des Formkörpers.

Am meisten bevorzugt enthält der Formkörper im Bereich von 50 bis 65 Gew.-% der Komponente (A), im Bereich von 10 bis 20 Gew.-% der Komponente (B) und im Bereich von 25 bis 35 Gew.-% der Komponente (C), jeweils bezogen auf das Gesamtgewicht des Formkörpers.

Erfindungsgemäß handelt es sich bei der Komponente (A) um die Komponente (A), die im Sinterpulver (SP) enthalten war. Ebenso handelt es sich bei der Komponente (B) um die Komponente (B), die im Sinterpulver (SP) enthalten war, und bei der Komponente (C) um die Komponente (C), die im Sinterpulver (SP) enthalten war.

Enthielt das Sinterpulver (SP) das mindestens eine Additiv und/oder das mindestens eine Verstärkungsmittel, so enthält üblicherweise auch der erfindungsgemäß erhaltene Formkörper das mindestens eine Additiv und/oder das mindestens eine Verstärkungsmittel.

Wenn Schritt i-1) durchgeführt worden ist, enthält der Formkörper zudem üblicherweise die IR-absorbierende Tinte.

Dem Fachmann ist klar, dass durch die Belichtung des Sinterpulvers (SP) die Komponenten (A), (B) und (C) sowie gegebenenfalls das mindestens eine Additiv und das mindestens eine Verstärkungsmittel chemische Reaktionen eingehen können und sich dadurch verändern können. Derartige Reaktionen sind dem Fachmann bekannt.

Bevorzugt gehen die Komponenten (A), (B) und (C) sowie gegebenenfalls das mindestens eine Additiv und das mindestens eine Verstärkungsmittel beim Belichten in Schritt ii) keine chemische Reaktion ein, sondern das Sinterpulver (SP) schmilzt lediglich auf.

Nachfolgend wird die Erfindung anhand von Beispielen näher erläutert, ohne sie hierauf zu beschränken.

Beispiele

Es werden die folgenden Komponenten eingesetzt:

- teilkristallines Polyamid (Komponente (A)):

    (P1) Polyamid 6 (Ultramid B27, BASF SE)
    (P2) Polyamid 6/66 (Ultramid C33, BASF SE)

- amorphes Polyamid (Komponente (B)):

    (AP1) Polyamid 6I/6T (Grivory G16, Ems) mit einem molaren Verhältnis von 6I : 6T von 1, 9 : 1
    (AP2) Polyamid 6/3T (Trogamid T 5000, Evonik)

- mineralisches Flammschutzmittel (Komponente (C)):
    (FM1) Magnesiumhydroxid (Magnifin H5 IV, Albemarle), Aminosilanmodifiziert, Schüttgewicht 501 kg/m$^3$, Partikelgrößenverteilung D10 = 0,8 $\mu$m, D50 = 1,7 $\mu$m, D90 = 3,1 $\mu$m, bestimmt mittels Laserbeugung

- Additiv:

    (A1) phenolisches Antioxidans (Irganox 1098 (N,N'-hexane-1,6-diylbis(3-(3,5-di-tert butyl-4-hydroxyphenylpropionamid))), BASF SE)
    (A2) Ruß in Form von Batch UB420 (30 % in PA 6), (Spezialschwarz 4, CAS-Nr. 1333-86-4, Evonik)

In Tabelle 1 sind die wesentlichen Parameter der eingesetzten teilkristallinen Polyamide (Komponente (A)) angegeben.

In Tabelle 2 die wesentlichen Parameter der eigesetzten amorphen Polyamide (Komponente (B)).

Tabelle 1

| | Typ | AEG [mmol/kg] | CEG [mmol/kg] | $T_M$ [°C] | $T_G$ [°C] | Nullscherviskosität $\eta_0$ bei 240 °C [Pas] |
|---|---|---|---|---|---|---|
| P1 | PA 6 | 36 | 54 | 220,0 | 53 | 399 |
| P2 | PA 6/66 | 47 | 40 | 193,7 | 50 | 2300 |

Tabelle 2

| | Typ | AEG [mmol/kg] | CEG [mmol/kg] | $T_g$, [°C] | Nullscherviskosität $\eta_0$ bei 240 °C [Pas] |
|---|---|---|---|---|---|
| AP1 | PA 6I6T | 37 | 86 | 125 | 770 |
| AP2 | PA 6/3T | 45 | 59 | 150 | 7200 bei 0,5 rad/s |

AEG gibt die Aminoendgruppenkonzentration an. Diese wird bestimmt mittels Titration. Zur Bestimmung der Aminoendgruppenkonzentration (AEG) wird 1 g der Komponente (teilkristallines Polyamid oder amorphes Polyamid) in 30 ml eines Phenol/Methanol-Gemischs (Volumenverhältnis Phenol zu Methanol 75:25) gelöst und anschließend mit 0,2 N Salzsäure in Wasser visuell titriert.

CEG gibt die Carboxylendgruppenkonzentration an. Diese wird bestimmt mittels Titration. Zur Bestimmung der Carboxylendgruppenkonzentration (CEG) wird 1 g der Komponente (teilkristallines Polyamid oder amorphes Polyamid) in 30 ml Benzylalkohol aufgelöst und anschließend bei 120 °C mit 0,05 N Kalilauge in Wasser visuell titriert.

Die Schmelztemperatur ($T_M$) der teilkristallinen Polyamide sowie sämtliche Glasübergangstemperaturen ($T_G$) wurden jeweils mittels dynamischer Differenzkalorimetrie bestimmt.

Zur Bestimmung der Schmelztemperatur ($T_M$) wurde, wie vorstehend beschrieben, ein erster Heizlauf (H1) mit einer Heizrate von 20 K/min gemessen. Die Schmelztemperatur ($T_M$) entsprach dann der Temperatur am Maximum des Aufschmelzpeaks des ersten Heizlaufs (H1).

Zur Bestimmung der Glasübergangstemperatur ($T_G$) wurden im Anschluss an den ersten Heizlauf (H1) ein Kühllauf (K) und daran anschließend ein zweiter Heizlauf (H2) gemessen. Der Kühllauf wurde mit einer Kühlrate von 20 K/min gemessen. Der erste Heizlauf (H1) und der zweite Heizlauf (H2) wurden mit einer Heizrate von 20 K/min gemessen. Die Glasübergangstemperatur ($T_G$) wurde dann auf halber Höhe der Stufe des zweiten Heizlaufs (H2) bestimmt.

Die Nullscherviskosität $\eta_0$ (Zero shear rate viscosity) wurde bestimmt mit einem Rotationsviskosimeter "DHR-1" der Firma TA Instruments und einer Platte-Platte-Geometrie mit einem Durchmesser von 25 mm und einem Spaltabstand von 1 mm. Es wurden ungetemperte Proben für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messtemperatur: 240 °C, Messzeit: 20 min, Vorheizzeit nach Probenpräparation: 1,5 min.

Herstellung von Sinterpulvern in einem Zweischneckenextruder

Zur Herstellung von Sinterpulvern wurden die in Tabelle 3 angegebenen Komponenten in dem in Tabelle 3 angegebenen Verhältnis in einem Zweischneckenextruder (ZE25) mit einer Drehzahl von 230 U/min (Umdrehungen pro Minute) bei 270 °C mit einem Durchsatz von 20 kg/h compoundiert, stranggranuliert und anschließend mit einer, mit flüssigem Stickstoff gekühlten, Stiftmühle zu Pulvern verarbeitet (Partikelgrößenverteilung 10 bis 100 $\mu$m).

Tabelle 3

| Beispiel | (P1) [Gew.-%] | (P2) [Gew.-%] | (AP1) [Gew.-%] | (AP2) [Gew.-%] | (FM1) [Gew.-%] | (A1) [Gew.-%] | (A2) [Gew.-%] |
|---|---|---|---|---|---|---|---|
| V1 | 78,6 | | 21 | | | 0,4 | |
| B2 | 66,8 | | 17,8 | | 15 | 0,4 | |
| B3 | 62,8 | | 16,8 | | 20 | 0,4 | |
| V4 | 79,6 | | | | 20 | 0,4 | |
| B4a | 64,36 | | 10,0 | | 25 | 0,4 | 0,25 |
| B4b | | 64,25 | 10,5 | | 25 | 0,25 | |

(fortgesetzt)

| Beispiel | (P1) [Gew.-%] | (P2) [Gew.-%] | (AP1) [Gew.-%] | (AP2) [Gew.-%] | (FM1) [Gew.-%] | (A1) [Gew.-%] | (A2) [Gew.-%] |
|---|---|---|---|---|---|---|---|
| B5 | 56,5 | | 15,1 | | 28 | 0,4 | |
| B6 | 56,17 | | 15,1 | | 28 | 0,4 | 0,33 |
| B7 | 56,17 | | | 15,1 | 28 | 0,4 | 0,33 |
| B8 | 51,0 | | 13,6 | | 35 | 0,4 | |
| B9 | | 55,65 | 9,1 | | 35 | 0,25 | |
| B10 | 39,1 | | 10,5 | | 50 | 0,4 | |

Für die Pulver wurde die Schmelztemperatur ($T_M$), wie vorstehend beschrieben, bestimmt.

Die Kristallisationstemperatur ($T_C$) wurde mittels dynamischer Differenzkalorimetrie (DDK; differential scanning calorimetry, DSC) bestimmt. Dazu wurden zunächst ein Heizlauf (H) mit einer Heizrate von 20 K/min und anschließend ein Kühllauf (K) mit einer Kühlrate von 20 K/min gemessen. Die Kristallisationstemperatur ($T_C$) ist die Temperatur am Extremum des Kristallisationspeaks.

Der Betrag der komplexen Viskosität in Scherung (complex shear viscosity) wurde bestimmt mittels Platte-Platte Rotationsrheometer bei einer Kreisfrequenz von 0,5 rad/s und einer Temperatur von 240 °C. Es wurde ein Rotationsviskosimeter "DHR-1" der Firma TA Instruments verwendet, wobei der Durchmesser 25 mm und der Spaltabstand 1 mm betrug. Es wurden ungetemperte Proben für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messzeit: 20 min, Vorheizzeit nach Probenpräparation: 1,5 min.

Das Sinterfenster (W) wurde wie vorstehend beschrieben als Differenz aus der Onset-Temperatur des Aufschmelzens ($T_M^{onset}$) und der Onset-Temperatur der Kristallisation ($T_C^{onset}$) bestimmt.

Zur Bestimmung der thermooxidativen Stabilität der Sinterpulver wurde die komplexe Scherviskosität von frisch hergestellten Sinterpulvern sowie von Sinterpulvern nach Ofenlagerung bei 0,5 % Sauerstoff für 16 Stunden und 195 °C bestimmt. Es wurde das Verhältnis der Viskosität nach Lagerung (nach Alterung) zur Viskosität vor Lagerung (vor Alterung) bestimmt. Die Viskositätsmessung erfolgt mittels Rotationsrheologie bei einer Messfrequenz von 0,5 rad/s bei einer Temperatur von 240 °C.

Die Ergebnisse sind in Tabelle 4 zu sehen.

Tabelle 4

| Beispiel | Betrag der komplexen Viskosität bei 0,5 rad/s, 240 °C [Pas] | Verhältnis Viskosität nach Alterung zu vor Alterung | $T_M$ [°C] | $T_C$ [°C] | Sinterfenster W [K] | Sinterfenster W nach Alterung [K] |
|---|---|---|---|---|---|---|
| V1 | 632 | 3,4 | 218,2 | 172,5 | 28,3 | 27,1 |
| B2 | 1030 | 0,98 | 217,6 | 173,8 | 24,4 | 24,0 |
| B3 | 1350 | 1,24 | 217,9 | 174,9 | 26,1 | 25,9 |
| V4 | 1140 | 0,95 | 219,1 | 183,7 | 21,6 | 17,5 |
| B4a | 1380 | 1,26 | 217,8 | 178,8 | 22,1 | n.b. |
| B4b | 6250 | 3,8 | 193,0 | 143,2 | 29,6 | n.b. |
| B5 | 1646 | 1,2 | 217,6 | 173,8 | 26,4 | n.b. |
| B6 | 1630 | 1,2 | 217,2 | 173,0 | 26,3 | 25,7 |
| B7 | 2910 | 1,05 | 218,2 | 176,0 | 25,3 | 21,1 |
| B8 | 2646 | 1,5 | 217,3 | 173,3 | 24,6 | n.b. |
| B9 | 9300 | 5,5 | 192,5 | 143,9 | 29,0 | 40,1 |

(fortgesetzt)

| Beispiel | Betrag der komplexen Viskosität bei 0,5 rad/s, 240 °C [Pas] | Verhältnis Viskosität nach Alterung zu vor Alterung | $T_M$ [°C] | $T_C$ [°C] | Sinterfenster W [K] | Sinterfenster W nach Alterung [K] |
|---|---|---|---|---|---|---|
| B10 | 6100 | 5,3 | 217,1 | 172,6 | 27,9 | n.b. |
| n.b.: nicht bestimmt | | | | | | |

Es ist zu erkennen, dass die erfindungsgemäßen Sinterpulver ein, für das selektive Lasersintern, ausreichend breites Sinterfenster auch nach Alterung aufweisen.

Darüber hinaus werden für die erhaltenen Sinterpulver die Schüttdichte nach DIN EN ISO 60 und die Stampfdichte nach DIN EN ISO 787-11 bestimmt, sowie der Hausner-Faktor als Verhältnis aus Stampfdichte zu Schüttdichte.

Die Partikelgrößenverteilung, angegeben als D10-, D50- und D90-Wert, wurden wie vorstehend beschrieben, mit einem Malvern Mastersizer bestimmt.

Der Magnesiumgehalt wurde mittels Atomspektrometrie bestimmt.

Der Lawinenwinkel wurde mittels Revolution Powder Analyzer (RPA) mit einer Umdrehungszahl von 0,6 U/min und 15 Bildern pro Sekunde bestimmt. Es wurde aus 128 Lawinenereignissen gemittelt.

Die Ergebnisse sind in Tabelle 5 zu sehen.

Tabelle 5

| Beispiele | Schüttdichte [kg/m$^3$] | Stampfdichte [kg/m$^3$] | Hausner Faktor | D10 [μm] | D50 [μm] | D90 [μm] | Lawinenwinkel [°] | Mg-Gehalt [g/100g] |
|---|---|---|---|---|---|---|---|---|
| V1 | 460 | 570 | 1,24 | 39 | 65 | 107 | 52 | **0** |
| B2 | 499 | 600 | 1,20 | 42 | 66,5 | 104 | n.b. | n.b. |
| B3 | 532 | 642 | 1,21 | 37 | 63,5 | 104 | n.b. | 8,5 |
| V4 | n.b. | n.b. | n.b. | 38 | 65,5 | 108 | n.b. | n.b. |
| B4a | n.b. | n.b. | n.b. | 39,2 | 65,3 | 106 | n.b. | n.b. |
| B4b | 520 | 634 | 1,22 | 39 | 65,8 | 108 | n.b. | n.b. |
| B5 | n.b. | n.b. | n.b. | 35 | 63,5 | 108 | 45,9 | n.b. |
| B6 | n.b. | n.b. | n.b. | 48,5 | 75,7 | 117 | 51,1 | n.b. |
| B7 | n.b. | n.b. | n.b. | 43 | 67,4 | 104 | n.b. | n.b. |
| B8 | n.b. | n.b. | n.b. | 38 | 63 | 103 | n.b. | n.b. |
| B9 | 553 | 684 | 1,24 | 37,6 | 64,5 | 107 | n.b. | n.b. |
| B10 | n.b. | n.b. | n.b. | 40 | 66 | 107 | n.b. | n.b. |
| n.b.: nicht bestimmt | | | | | | | | |

Lasersinterversuche

Die Sinterpulver (SP) wurden mit einer Schichtdicke von 0,1 mm in den Bauraum mit der in Tabelle 6 angegebenen Temperatur eingebracht. Anschließend wurden die Sinterpulver mit einem Laser, mit der in Tabelle 6 angegebenen Laserleistung und dem angegebenen Punktabstand, belichtet, wobei die Geschwindigkeit des Lasers über die Probe beim Belichten bei 15 m/sec lag. Der Punktabstand wird auch als Laserabstand oder als Spurabstand bezeichnet. Beim selektiven Lasersintern erfolgt das Scannen üblicherweise in Streifen. Der Punktabstand gibt den Abstand zwischen den Mitten der Streifen, also zwischen den beiden Zentren des Laserstrahls zweier Streifen, an. Die Lasersinterversuche erfolgten auf Farsoon HT251.

Tabelle 6

| Beispiel | Bauraumtemperatur [°C] | Laserleistung [W] | Lasergeschwindigkeit [m/s] | Punktabstand [mm] |
|---|---|---|---|---|
| V1 | 198 | 25 | 5 | 0,2 |
| B2 | 206 | 55 | 15 | 0,2 |
| B3 | 205 | 32 | 5 | 0,2 |
| V4 | 203 | 68 | 12,5 | 0,2 |
| B4a | 207 | 50 | 15 | 0,2 |
| B4b | 184 | 50 | 15 | 0,2 |
| B5 | 208 | 55 | 15 | 0,2 |
| B6 | 202 | 55 | 15 | 0,2 |
| B7 | 204 | 55 | 15 | 0,2 |
| B8 | 200 | 32 | 5 | 0,2 |
| B9 | 190 | 55 | 15 | 0,2 |
| B10 | 206 | 30 | 5 | 0,2 |

Es wurden die Flammschutzeigenschaften der lasergesinterten Prüfstäbe nach UL 94 Vx: 2016 (vertikale Prüfung) bestimmt. Die Bestimmung erfolgte einerseits nach Lagerung für 2 Tage bei 23 °C und 50 % relativer Feuchte und andererseits nach Lagerung für 7 Tage bei 70 °C im Trockenschrank.

Die Ergebnisse sowie die Dicke der Prüfstäbe sind in Tabelle 7 gezeigt.

Tabelle 7

| Beispiel | Dicke UL-Prüfstab [mm] | 2 Tage / 23 °C / 50 % r.h. | 7 Tage / 70 °C |
|---|---|---|---|
| V1 | 0,8 | V-- | V-- |
| | 1,7 | V-- | V-- |
| B2 | 0,96 | V-- | V-- |
| | 1,6 | V-- | V-- |
| B3 | 1,25 - 1,4 | V-2, 41 s | V-2, 40 s |
| | 0,85 | V-2, 20 s | V-2, 17 s |
| | 0,94 | V-2, 66 s | n.b. |
| | 1,5 | V-2, 44 s | V-2, 48 s |
| | 2,2 | V-2, 51 s | V-2, 69 s |
| V4 | 0,84 | V-2, 15 s | V-2, 69 s |
| | 1,7 | V-2, 49 s | V-2, 73 s |

(fortgesetzt)

| Beispiel | Dicke UL-Prüfstab [mm] | 2 Tage / 23 °C / 50 % r.h. | 7 Tage / 70 °C |
|---|---|---|---|
| B4a | 0,52 | V-2, 14 s | V-2, 9 s |
| | 0,84 | V-2, 9 s | V-2, 21 s |
| | 1,7 | V-2, 60 s | V-2, 68 s |
| B4b | 0,82 | V-2, 16 s | V-2, 6 s |
| | 1,56 | V-2 38 s | V-2, 31 s |
| B5 | 1,0 | n.b. | V-2, 33 s |
| | 1,8 | n.b. | V-2, 79 s |
| B6 | 0,81 | V-2, 13 s | V-2, 11 s |
| | 1,6 | V-2, 44 s | V-2, 46 s |
| B7 | 0,88 | V-2, 12 s | V-2, 19 s |
| | 1,6 | V-2, 47 s | V-2, 57 s |
| B8 | 0,84 | V-2, 17 s | n.b. |
| | 1,8 | V-2, 54 s | n.b. |
| B9 | 0,95 | V-2, 19 s | V-2, 13 s |
| | 1,7 | V-2, 48 s | V-2, 42 s |
| B10 | 1,0 | V-2, 21 s | n.b. |
| | 1,9 | V-2, 19 s | n.b. |
| n.b.: nicht bestimmt | | | |

Anschließend wurden außerdem die Eigenschaften der erhaltenen Zugstäbe (Sinterstäbe) bestimmt. Die Prüfung der erhaltenen Zugstäbe (Sinterstäbe) erfolgte im trockenen Zustand nach Trocknung bei 80 °C für 336 Stunden im Vakuum. Die Ergebnisse sind in Tabelle 8 gezeigt. Ferner wurden Charpy-Stäbe hergestellt, die ebenfalls trocken geprüft wurden (nach ISO 179-2/1eA (F): 1997+Amd. 1 : 2011 und ISO 179-2/1eU: 1997+Amd. 1 : 2011).

Die Zugfestigkeit, das Zug-E-Modul und die Bruchdehnung wurden gemäß ISO 527-2 : 2012 bestimmt.

Die Wärmeformbeständigkeitstemperatur (heat deflection temperature, HDT) wurde gemäß ISO 75-2 : 2013 ermittelt, wobei sowohl Methode A mit einer Randfaserspannung 1,8 N/mm$^2$, als auch Methode B mit einer Randfaserspannung von 0,45 N/mm$^2$ verwendet wurde.

Die Ergebnisse sind in Tabelle 8 zu sehen.

Tabelle 8

| Beispiel | Charpy Schlagzähigkeit ungekerbt [kJ/m²] | Charpy Schlagzähigkeit gekerbt [kJ/m²] | Zug-festig-keit [MPa] | Zug-E-Modul [MPa] | Bruch-dehnung [%] | HDT A [°C] | HDT B [°C] |
|---|---|---|---|---|---|---|---|
| V1 | 4,94 | 1,5 | 56,7 | 3660 | 1,7 | 94,4 | 150,4 |
| B2 | n.b. | n.b. | n.b. | n.b. | n.b. | n.b. | n.b. |
| B3 | 7,3 | 2,9 | 61 | 4390 | 1,6 | 114 | 210 |
| V4 | 8,2 | 2,3 | 62 | 4370 | 1,8 | n.b. | n.b. |
| B4a | 7,0 | 1,5 | 63 | 5170 | 1,4 | n.b. | n.b. |
| B4b | n.b. | n.b. | 54 | 3610 | 1,9 | n.b. | n.b. |
| B5 | 8,1 | 1,4 | 64 | 5230 | 1,4 | 116 | 203 |
| B6 | n.b. | n.b. | 49 | 5560 | 1,6 | 123 | 203 |
| B7 | n.b. | n.b. | 57 | 4780 | 1,4. | n.b. | n.b. |
| B8 | n.b. | n.b. | n.b. | n.b. | n.b. | n.b. | n.b. |
| B9 | n.b. | n.b. | 41 | 3680 | 1,5 | n.b. | n.b. |
| B10 | 5,0 | 2,0 | 53 | 7090 | 0,8 | 126 | 204 |

n.b.: nicht bestimmt

Die erfindungsgemäßen Sinterpulver zeigen eine gute SLS-Verarbeitbarkeit und einen geringen Verzug.

**Patentansprüche**

1. Verfahren zur Herstellung eines Formkörpers umfassend die Schritte:

    i) Bereitstellen einer Schicht eines Sinterpulvers (SP), das die Komponenten

        (A) mindestens ein teilkristallines Polyamid,
        (B) mindestens ein amorphes Polyamid,
        (C) mindestens ein mineralisches Flammschutzmittel

    enthält,
    ii) Belichten der in Schritt i) bereitgestellten Schicht des Sinterpulvers (SP), **dadurch gekennzeichnet, dass** das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

2. Verfahren gemäß Anspruch 1, **dadurch gekennzeichnet, dass** die Komponente (C) auf Basis von Magnesium und/oder Aluminium ist.

3. Verfahren gemäß Anspruch 1 oder 2, **dadurch gekennzeichnet, dass** die Komponente (C) ausgewählt ist aus der Gruppe bestehend aus Magnesiumhydroxid, Aluminiumoxidhydroxid und Aluminiumhydroxid.

4. Verfahren gemäß einem der Ansprüche 1 bis 3, **dadurch gekennzeichnet, dass** das Belichten in Schritt ii) mit einer Strahlungsquelle erfolgt, die ausgewählt ist aus der Gruppe bestehend aus Lasern und Infrarotstrahlern.

5. Verfahren gemäß einem der Ansprüche 1 bis 4, **dadurch gekennzeichnet, dass** die Komponente (A) ausgewählt ist aus der Gruppe, bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

6. Verfahren gemäß einem der Ansprüche 1 bis 5, **dadurch gekennzeichnet, dass** die Komponente (B) ausgewählt ist aus der Gruppe bestehend aus PA 6I/6T, PA 6I und PA 6/3T.

7. Verfahren gemäß einem der Ansprüche 1 bis 6, **dadurch gekennzeichnet, dass** das Sinterpulver (SP) zusätzlich im Bereich von 0,1 bis 10 Gew.-% mindestens eines Additivs, ausgewählt aus der Gruppe bestehend aus Antinukleierungsmitteln, Stabilisatoren, Endgruppenfunktionalisieren, Farbstoffen und Farbpigmenten enthält, bezogen auf das Gesamtgewicht des Sinterpulvers (SP).

8. Verfahren gemäß einem der Ansprüche 1 bis 7, **dadurch gekennzeichnet, dass** in dem Sinterpulver (SP) die Komponente (C) mit der Komponente (A) und/oder mit der Komponente (B) beschichtet ist.

9. Verfahren gemäß einem der Ansprüche 1 bis 8, **dadurch gekennzeichnet, dass** das Sinterpulver (SP)

einen D10-Wert im Bereich von 10 bis 60 $\mu$m,
einen D50-Wert im Bereich von 25 bis 90 $\mu$m und
einen D90-Wert im Bereich von 50 bis 150 $\mu$m
aufweist,
wobei die Bestimmung des D10-, D50- und D90-Wertes mittels Laserbeugung unter Verwendung eines Master Sizers 3000 der Firma Malvern erfolgt.

10. Verfahren zur Herstellung eines Sinterpulvers (SP) umfassend die Schritte

a) Mischen der Komponenten

(A) mindestens ein teilkristallines Polyamid,
(B) mindestens ein amorphes Polyamid,
(C) mindestens ein mineralisches Flammschutzmittel

b) Mahlen der in Schritt a) erhaltenen Mischung unter Erhalt des Sinterpulvers (SP),
**dadurch gekennzeichnet, dass** das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

11. Verfahren gemäß Anspruch 10, **dadurch gekennzeichnet, dass** die Komponente (C)

einen D10-Wert im Bereich von 0,3 bis 1,2 $\mu$m,
einen D50-Wert im Bereich von 1,2 bis 2 $\mu$m und
einen D90-Wert im Bereich von 2 bis 5 $\mu$m
aufweist,
wobei die Bestimmung des D10-, D50- und D90-Wertes mittels Laserbeugung unter Verwendung eines Master Sizers 3000 der Firma Malvern erfolgt.

12. Sinterpulver (SP) erhältlich nach einem Verfahren gemäß Anspruch 10 oder 11.

13. Verwendung eines Sinterpulvers (SP), das die Komponenten

(A) mindestens ein teilkristallines Polyamid,
(B) mindestens ein amorphes Polyamid,

EP 3 691 861 B1

(C) mindestens ein mineralisches Flammschutzmittel

enthält, in einem Sinterverfahren,
**dadurch gekennzeichnet, dass** das Sinterpulver (SP) im Bereich von 30 bis 70 Gew.-% der Komponente (A), im Bereich von 5 bis 25 Gew.-% der Komponente (B) und im Bereich von 20 bis 60 Gew.-% der Komponente (C) enthält, jeweils bezogen auf das Gesamtgewicht des Sinterpulvers (SP).

14. Formkörper erhältlich nach einem Verfahren gemäß einem der Ansprüche 1 bis 9.

**Claims**

1. A process for producing a shaped body, comprising the steps of:

    i) providing a layer of a sinter powder (SP) comprising the following components:

        (A) at least one semicrystalline polyamide,
        (B) at least one amorphous polyamide,
        (C) at least one mineral flame retardant,

    ii) exposing the layer of the sinter powder (SP) provided in step i), wherein the sinter powder (SP) comprises in the range from 30% to 70% by weight of component (A), in the range from 5% to 25% by weight of component (B) and in the range from 20% to 60% by weight of component (C), based in each case on the total weight of the sinter powder (SP).

2. The process according to claim 1, wherein component (C) is based on magnesium and/or aluminum.

3. The process according to claim 1 or 2, wherein component (C) is selected from the group consisting of magnesium hydroxide, aluminum oxide hydroxide and aluminum hydroxide.

4. The process according to any of claims 1 to 3, wherein the exposing in step ii) is effected with a radiation source selected from the group consisting of lasers and infrared sources.

5. The process according to any of claims 1 to 4, wherein component (A) is selected from the group consisting of PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 and copolyamides of these.

6. The process according to any of claims 1 to 5, wherein component (B) is selected from the group consisting of PA 6I/6T, PA 6I and PA 6/3T.

7. The process according to any of claims 1 to 6, wherein the sinter powder (SP) additionally comprises in the range from 0.1% to 10% by weight of at least one additive selected from the group consisting of antinucleating agents, stabilizers, end group functionalizers, dyes and color pigments, based on the total weight of the sinter powder (SP).

8. The process according to any of claims 1 to 7, wherein component (C) in the sinter powder (SP) has been coated with component (A) and/or with component (B).

9. The process according to any of claims 1 to 8, wherein the sinter powder (SP) has

    a D10 in the range from 10 to 60 $\mu$m,
    a D50 in the range from 25 to 90 $\mu$m and
    a D90 in the range from 50 to 150 $\mu$m,
    wherein D10, D50 and D90 are determined by means of laser diffraction using a Malvern Mastersizer 3000.

10. A process for producing a sinter powder (SP), comprising the steps of

    a) mixing the following components:

22

(A) at least one semicrystalline polyamide,
(B) at least one amorphous polyamide,
(C) at least one mineral flame retardant,

b) grinding the mixture obtained in step a) to obtain the sinter powder (SP),
wherein the sinter powder (SP) comprises in the range from 30% to 70% by weight of component (A), in the range from 5% to 25% by weight of component (B) and in the range from 20% to 60% by weight of component (C), based in each case on the total weight of the sinter powder (SP).

11. The process according to claim 10, wherein component (C) has

a D10 in the range from 0.3 to 1.2 $\mu$m,
a D50 in the range from 1.2 to 2 $\mu$m and
a D90 in the range from 2 to 5 $\mu$m,
wherein D10, D50 and D90 are determined by means of laser diffraction using a Malvern Mastersizer 3000.

12. A sinter powder (SP) obtainable by a process according to claim 10 or 11.

13. The use of a sinter powder (SP) comprising the following components:

(A) at least one semicrystalline polyamide,
(B) at least one amorphous polyamide,
(C) at least one mineral flame retardant,

in a sintering process,
wherein the sinter powder (SP) comprises in the range from 30% to 70% by weight of component (A), in the range from 5% to 25% by weight of component (B) and in the range from 20% to 60% by weight of component (C), based in each case on the total weight of the sinter powder (SP).

14. A shaped body obtainable by a process according to any of claims 1 to 9.


**Revendications**

1. Procédé de préparation d'un corps moulé comprenant les étapes :

i) mise à disposition d'une couche d'une poudre de frittage (SP) qui contient les composants

(A) au moins un polyamide partiellement cristallin,
(B) au moins un polyamide amorphe,
(C) au moins un agent ignifugeant minéral,

ii) illumination de la couche de la poudre de frittage (SP) mise à disposition dans l'étape i), **caractérisé en ce que** la poudre de frittage (SP) contient dans la plage de 30 à 70 % en poids du composant (A), dans la plage de 5 à 25 % en poids du composant (B) et dans la plage de 20 à 60 % en poids du composant (C), à chaque fois par rapport au poids total de la poudre de frittage (SP).

2. Procédé selon la revendication 1, **caractérisé en ce que** le composant (C) est à base de magnésium et/ou d'aluminium.

3. Procédé selon la revendication 1 ou 2, **caractérisé en ce que** le composant (C) est choisi dans le groupe constitué par l'hydroxyde de magnésium, l'oxyde-hydroxyde d'aluminium et l'hydroxyde d'aluminium.

4. Procédé selon l'une quelconque des revendications 1 à 3, **caractérisé en ce que** l'illumination dans l'étape ii) est réalisée avec une source de rayonnement qui est choisi dans le groupe constitué par des lasers et des faisceaux d'infrarouges.

5. Procédé selon l'une quelconque des revendications 1 à 4, **caractérisé en ce que** le composant (A) est choisi dans le groupe constitué par PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 et des copolyamides de ceux-ci.

6. Procédé selon l'une quelconque des revendications 1 à 5, **caractérisé en ce que** le composant (B) est choisi dans le groupe constitué par PA 6I/6T, PA 6I et PA 6/3T.

7. Procédé selon l'une quelconque des revendications 1 à 6, **caractérisé en ce que** la poudre de frittage (SP) contient de plus dans la plage de 0,1 à 10 % en poids d'au moins un additif choisi dans le groupe constitué par des agents anti-nucléation, des stabilisants, des agents de fonctionnalisation de groupes terminaux, des colorants et des pigments colorés, par rapport au poids total de la poudre de frittage (SP).

8. Procédé selon l'une quelconque des revendications 1 à 7, **caractérisé en ce que** dans la poudre de frittage (SP), le composant (C) est revêtu par le composant (A) et/ou par le composant (B).

9. Procédé selon l'une quelconque des revendications 1 à 8, **caractérisé en ce que** la poudre de frittage (SP) présente

une valeur de D10 dans la plage de 10 à 60 $\mu$m,
une valeur de D50 dans la plage de 25 à 90 $\mu$m et
une valeur de D90 dans la plage de 50 à 150 $\mu$m,
la détermination de la valeur de D10, de la valeur de D50 et de la valeur de D90 étant réalisée au moyen d'une diffraction laser en utilisant un Master Sizer 3000 de la société Malvern.

10. Procédé de préparation d'une poudre de frittage (SP) comprenant les étapes

a) mélange des composants

(A) au moins un polyamide partiellement cristallin,
(B) au moins un polyamide amorphe,
(C) au moins un agent ignifugeant minéral

b) broyage du mélange obtenu dans l'étape a) avec obtention de la poudre de frittage (SP),

**caractérisé en ce que** la poudre de frittage (SP) contient dans la plage de 30 à 70 % en poids du composant (A), dans la plage de 5 à 25 % en poids du composant (B) et dans la plage de 20 à 60 % en poids du composant (C), à chaque fois par rapport au poids total de la poudre de frittage (SP).

11. Procédé selon la revendication 10, **caractérisé en ce que** le composant (C) présente

une valeur de D10 dans la plage de 0,3 à 1,2 $\mu$m,
une valeur de D50 dans la plage de 1,2 à 2 $\mu$m et
une valeur de D90 dans la plage de 2 à 5 $\mu$m,
la détermination de la valeur de D10, de la valeur de D50 et de la valeur de D90 étant réalisée au moyen d'une diffraction laser en utilisant un Master Sizer 3000 de la société Malvern.

12. Poudre de frittage (SP) pouvant être obtenue par un procédé selon la revendication 10 ou 11.

13. Utilisation d'une poudre de frittage (SP) qui contient les composants

(A) au moins un polyamide partiellement cristallin,
(B) au moins un polyamide amorphe,
(C) au moins un agent ignifugeant minéral,

dans un procédé de frittage,
**caractérisé en ce que** la poudre de frittage (SP) contient dans la plage de 30 à 70 % en poids du composant (A), dans la plage de 5 à 25 % en poids du composant (B) et dans la plage de 20 à 60 % en poids du composant (C), à chaque fois par rapport au poids total de la poudre de frittage (SP).

14. Corps moulé pouvant être obtenu par un procédé selon l'une quelconque des revendications 1 à 9.

**Figur 1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6136948 A
- WO 9606881 A
- WO 2017140764 A1

### In der Beschreibung aufgeführte Nicht-Patentliteratur

- **CHI-SAN WU.** Size Exclusion Chromatography-Multi-Angle Laser Light Scattering. *Handbook of size exclusion chromatography and related techniques,* 19
- **CHI-SAN WU.** Size Exclusion Chromatography Multi-Angle Laser Light Scattering. *Handbook of Size Exclusion Chromatography and the Related Techniques,* 19
- *CHEMICAL ABSTRACTS,* 1333-86-4